(19) Europäisches Patentamt
European Patent Office
Office européen des brevets

(11) **EP 2 836 001 A1**

(12) **EUROPEAN PATENT APPLICATION**
published in accordance with Art. 153(4) EPC

(43) Date of publication:
**11.02.2015 Bulletin 2015/07**

(21) Application number: **13763655.1**

(22) Date of filing: **13.03.2013**

(51) Int Cl.:
**H04W 16/32** (2009.01)    **H04W 72/04** (2009.01)

(86) International application number:
**PCT/JP2013/057040**

(87) International publication number:
**WO 2013/141113 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2012  JP 2012062745**

(71) Applicant: **NTT DOCOMO, INC.**
**Chiyoda-ku**
**Tokyo 100-6150 (JP)**

(72) Inventors:
• **TAKEDA, Kazuaki**
**Tokyo 100-6150 (JP)**
• **KISHIYAMA, Yoshihisa**
**Tokyo 100-6150 (JP)**

(74) Representative: **Hoffmann Eitle**
**Patent- und Rechtsanwälte PartmbB**
**Arabellastraße 30**
**81925 München (DE)**

(54) **COMMUNICATIONS SYSTEM, BASE STATION DEVICE, AND COMMUNICATIONS METHOD**

(57)    The present invention is designed to provide a communication system, a base station apparatus and a communication method that are suitable for carrier aggregation in a HetNet. In a communication system which provides a first transmission point (20A) and a plurality of second transmission points (20B), and which controls carriers such that a mobile terminal apparatus (10) communicates with the first transmission point using a first carrier (CC #1) and communicates with the second transmission points using a second carrier (CC #2), which is different from the first carrier, the base station apparatuses (20B) to constitute the second transmission points transmit cell-specific reference signals in the second carrier using the same frequency resources between the second transmission points, and the mobile terminal apparatus receives the reference signals transmitted by the second carrier from the second transmission points.

FIG.9

EP 2 836 001 A1

# EP 2 836 001 A1

**Description**

Technical Field

The present invention relates to a communication system, a base station apparatus and a communication method that are applicable to a cellular system and so on.

Background Art

In a UMTS (Universal Mobile Telecommunications System) network, long-term evolution (LTE) has been under study for the purposes of further increasing high-speed data rates, providing low delay and so on (non-patent literature 1). In LTE, as multiple access schemes, a scheme that is based on OFDMA (Orthogonal Frequency Division Multiple Access) is used on downlink channels (downlink), and a scheme that is based on SC-FDMA (Single Carrier Frequency Division Multiple Access) is used on uplink channels (uplink).

Also, successor systems of LTE, referred to as "LTE-Advanced" or "LTE enhancement" (hereinafter "LTE-A"), are under study for the purposes of achieving further broadbandization and increased speed beyond LTE. In LTE-A (Rel-10), carrier aggregation to group a plurality of component carriers (CCs), where the system band of the LTE system is one unit, for broadbandization, is used. Also, in LTE-A, a HetNet (Heterogeneous Network) configuration to use an interference coordination technique (eICIC: enhanced Inter-Cell Interference Coordination) is under study.

Citation List

Non-Patent Literature

Non-Patent Literature 1: 3GPP TR 25.913 "Requirements for Evolved UTRA and Evolved UTRAN"

Summary of the Invention

Technical Problem

Now, future systems (Rel-11 and later versions) anticipate carrier aggregation to take into account improvement of spectral efficiency and reduction of interference caused in a HetNet. Although carrier aggregation will also be expected to make effective use of conventional CRSs (Cell-specific Reference Signals), in this case, there is a threat that problems might arise from the perspective of reduction of interference to be caused.

The present invention has been made in view of the above, and it is therefore an object of the present invention to provide a communication system, a base station apparatus and a communication method that are suitable for carrier aggregation in a HetNet.

Solution to Problem

The communication system of the present invention is a communication system which provides a first transmission point and a plurality of second transmission points, and which controls carriers such that a mobile terminal apparatus communicates with the first transmission point using a first carrier and communicates with a second transmission point using a second carrier which is different from the first carrier, and, in this communication system, base station apparatuses to constitute the second transmission points comprise a transmission section that transmits a cell-specific reference signal in the second carrier, using the same frequency resource between the second transmission points, and the mobile terminal apparatus comprises a receiving section that receives a reference signal transmitted from the second transmission point by the second carrier.

Technical Advantage of the Invention

According to the present invention, it is possible to make the positions to arrange reference signals of additional carrier types different than heretofore, so that it is possible to reduce the interference from the reference signals. By this means, it is possible to make effective use of conventional systems and furthermore achieve a communication system, a base station apparatus and a communication method that are suitable for carrier aggregation in a HetNet.

Brief Description of the Drawings

FIG. 1 is a diagram to explain a system band in an LTE-A system;
FIG. 2 is a diagram to show an example of carrier aggregation in a HetNet;
FIG. 3 is a diagram to show an example of carrier aggregation using an additional carrier type;
FIG. 4 provides diagrams to show examples of radio resource allocation in an additional carrier type;
FIG. 5 provides a diagram to show examples of radio resource allocation at a base station apparatus in carrier aggregation;
FIG. 6 provides diagrams to show a first example of an additional carrier type;
FIG. 7 provides diagrams to show a second example of an additional carrier type;
FIG. 8 provides diagrams to show a third example of an additional carrier type;
FIG. 9 provides diagrams to show a fourth example of an additional carrier type;
FIG. 10 is a diagram to explain a system configuration of a radio communication system;
FIG. 11 is a diagram to explain an overall configuration of a base station apparatus;
FIG. 12 is a diagram to explain an overall configuration of a mobile terminal apparatus;
FIG. 13 is a functional block diagram of a baseband signal processing section provided in a base station apparatus and part of higher layers; and
FIG. 14 is a functional block diagram of a baseband signal processing section provided in a mobile terminal apparatus.

Description of Embodiments

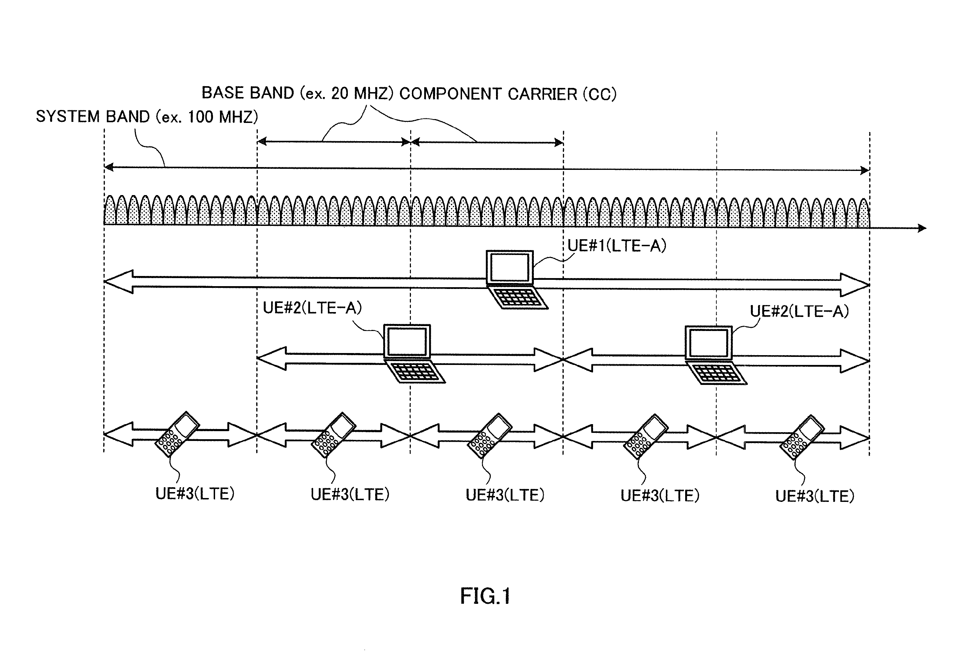

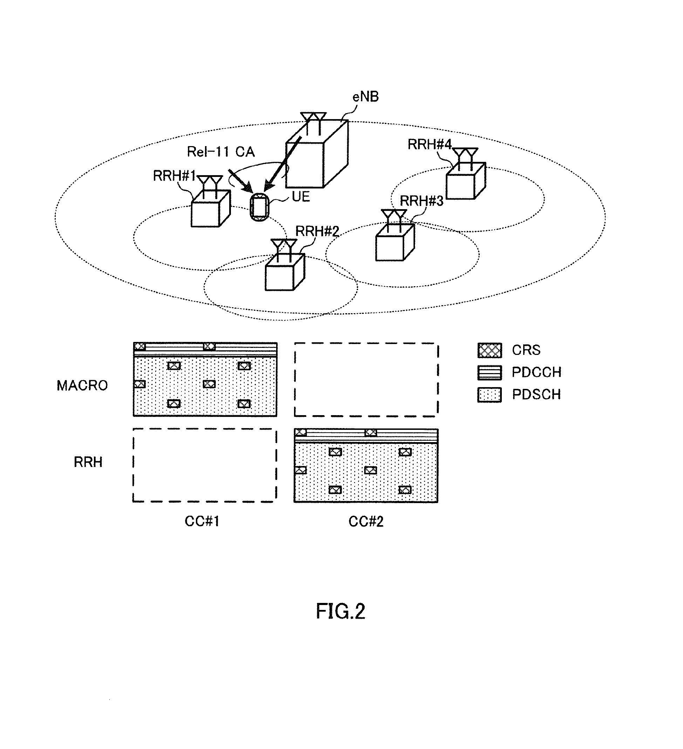

FIG. 1 is a diagram to show a layered bandwidth configuration defined in LTE-A. The example shown in FIG. 1 is a layered bandwidth configuration that is used when an LTE-A system having a first system band formed with a plurality of fundamental frequency blocks (hereinafter "component carriers") and an LTE system having a second system band formed with one component carrier coexist. In the LTE-A system, for example, radio communication is performed in a variable system bandwidth of 100 MHz or below, and, in the LTE system, for example, radio communication is performed in a variable system bandwidth of 20 MHz or below. The system band of the LTE-A system includes at least one component carrier, where the system band of the LTE system is one unit. Widening the band by way of gathering a plurality of component carriers in this way is referred to as "carrier aggregation."
For example, in FIG. 1, the system band of the LTE-A system is a system band to include bands of five component carriers (20 MHz$\times$5=100 MHz), where the system band (base band: 20 MHz) of the LTE system is one component carrier. In FIG. 1, mobile terminal apparatus UE (User Equipment) #1 is a mobile terminal apparatus to support the LTE-A system (and also support the LTE system), and is able to support a system band up to 100 MHz. UE #2 is a mobile terminal apparatus to support the LTE-A system (and also support the LTE system), and is able to support a system band up to 40 MHz (20 MHz$\times$2=40 MHz). UE #3 is a mobile terminal apparatus to support the LTE system (and not support the LTE-A system), and is able to support a system band up to 20 MHz (base band).
Future systems (Re1-11 and later versions) anticipate extension of carrier aggregation, for specific use with respect to a HetNet. To be more specific, system configurations such as the one shown in FIG. 2 may be possible. FIG. 2 is a diagram to show an example of carrier aggregation in a HetNet.
The system shown in FIG. 2 is configured in layers with a macro base station apparatus eNB (eNodeB) and a plurality of base station apparatus RRHs (Remote Radio Heads). Inside the cell of the macro base station apparatus eNB (first transmission point), small cells are formed locally by the base station apparatus RRHs (second transmission points). A mobile terminal apparatus UE is located in the small cell of base station apparatus RRH #1, and communicates with the macro base station apparatus eNB and base station apparatus RRH #1 by means of carrier aggregation. For example, carrier aggregation is executed using component carrier CC #1 of the macro base station apparatus eNB as a P-cell (Primary cell) and using component carrier CC #2 of base station apparatus RRH #1 as an S-cell.
To carry out carrier aggregation, the mobile terminal apparatus UE needs to find (detect) a base station apparatus RRH (S-cell) by inter-frequency measurement, while being connected with the macro base station apparatus eNB. After having captured synchronization with a PSS/SSS (Primary Synchronization Signal/Secondary Synchronization Signal), which are synchronization signals, a mobile terminal apparatus UE of Rel-10 or earlier versions measures the inter-frequency received quality from each base station apparatus RRH based on CRSs. Then, the measured signal quality of each base station apparatus RRH and a predetermined target value are compared, and a base station apparatus RRH (S-cell) of good received quality is detected.
Now, in Rel-11, carriers without compatibility with legacy component carriers of carrier aggregation are under study, and these may be effective in a HetNet where carrier aggregation is applied. A carrier without compatibility with legacy component carriers may be referred to as an "additional carrier type" or may be referred to as an "extension carrier."

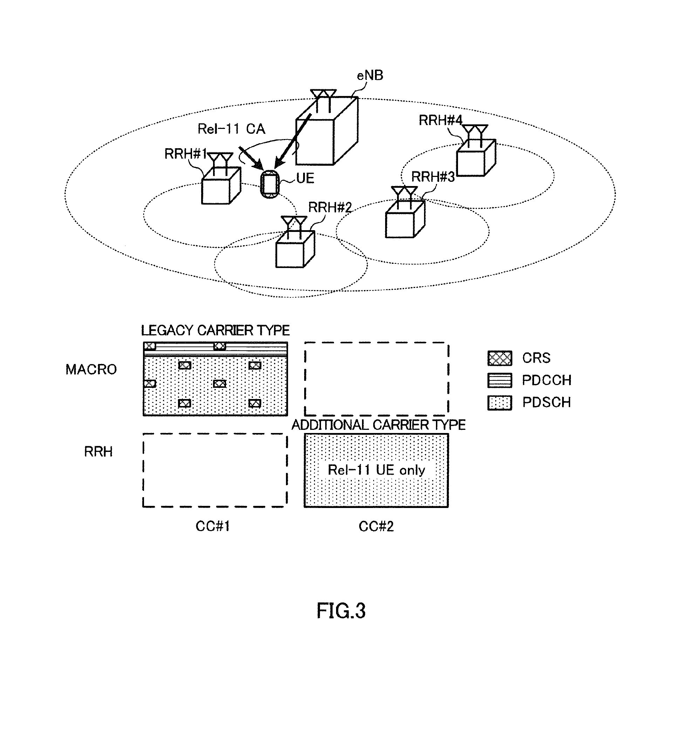

FIG. 3 is a diagram to show an example of carrier aggregation using an additional carrier type. Note that, in FIG. 3, CC #1 of the macro base station apparatus eNB is set in a legacy carrier type and CC #2 of a base station apparatus RRH is set in an additional carrier type. Note that FIG. 3 only shows CRSs, a PDCCH (Physical Downlink Control Channel), and a PDSCH (Physical Downlink Shared Channel), for ease of explanation. Also, the bandwidth of an additional carrier type does not have to use the system band of the LTE system (base band: 20 MHz) as one unit, and can be changed as appropriate.

As shown in FIG. 3, in the legacy carrier type, a PDCCH is set over three symbols from the top of one RB (Resource Block) defined in LTE. Also, in the legacy carrier type, in one RB, CRSs are set not to overlap with user data and other reference signals such as DM-RSs (Demodulation - Reference Signals). The CRSs are used to demodulate user data, and, besides, used to measure downlink channel quality information (CQI: Channel Quality Indicator) for scheduling and adaptive control, and used to measure the average downlink propagation path state for a cell search and handover (mobility measurement) and so on.

By contrast with this, an additional carrier type is able to make the CRSs and PDCCH subject to non-transmission, for example. This additional carrier type is not supported by conventional mobile terminal apparatus UEs (Rel-10 and earlier versions) and is expected to be supported only by new mobile terminal apparatus UEs (Rel-11 and later versions). Also, the additional carrier type is expected to be used primarily in S-cells (Secondary cells).

In this way, by executing carrier aggregation to make CRSs and PDCCH subject to non-transmission in an additional carrier type, it is possible to reduce the interference by the CRSs. That is, by making CRSs subject to non-transmission in an additional carrier type, it is possible to reduce the interference caused by the CRSs from neighboring base station apparatus RRHs. Also, it is possible to transmit user data and so on using the CRS and PDCCH radio resources, so that it is possible to improve spectral efficiency as well.

By contrast with this, from the perspective of making effective reuse of conventional (Rel-10 and earlier versions) resources (hardware and software), there is a demand to actively utilize CRSs, instead of making CRSs subject to non-transmission, even in an additional carrier type. However, when conventional CRSs are applied to an additional carrier type on an as-is basis, the interference which the CRSs cause may grow, and there is a threat of creating disadvantages in terms of transmission power and so on. So, reducing the radio resources to use to transmit CRSs in an additional carrier type compared with a legacy carrier type is under study.

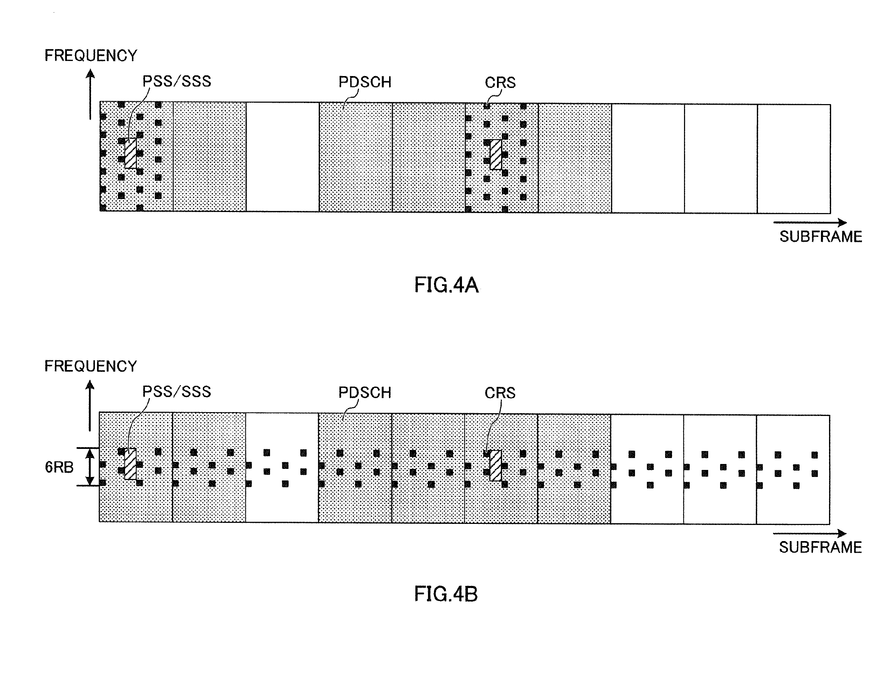

FIG. 4 provides diagrams to show examples of radio resource allocation in an additional carrier type. FIG. 4A shows an example where the radio resources for CRSs are reduced in the time direction, and FIG. 4B shows an example where the radio resources for CRSs are reduced in the frequency direction. Note that FIG. 4 only shows CRSs, PDSCHs, and PSSs/SSSs for ease of explanation.

In FIG. 4A, the PSSs/SSSs, which are synchronization signals, are transmitted every four subframes (that is, in a five-subframe cycle), and the CRSs are also transmitted every four subframes (in a five-subframe cycle). The CRSs are not transmitted in the other subframes. The PDSCHs are allocated to the first subframe, the second subframe, and the third to sixth subframes, and are used to transmit user data and so on. In this case, CRSs are not transmitted outside predetermined subframes, so that it is possible to reduce the interference caused by the CRSs and furthermore reduce transmission power. Note that the transmission cycle of CRSs is by no means limited to this.

In FIG. 4B, CRSs are transmitted in six RBs in the center, and are not transmitted in the other frequency resources (frequency positions). The PDSCHs are allocated to the first subframe, the second subframe and the third to sixth subframes, and are used to transmit user data and so on. In this case, CRSs are not transmitted in frequency resources other than the six RBs in the center, so that it is possible to reduce the interference caused by the CRSs and furthermore reduce transmission power. Note that CRSs do not necessarily have to be transmitted in six RBs in the center. CRSs may be transmitted in other frequency ranges as well.

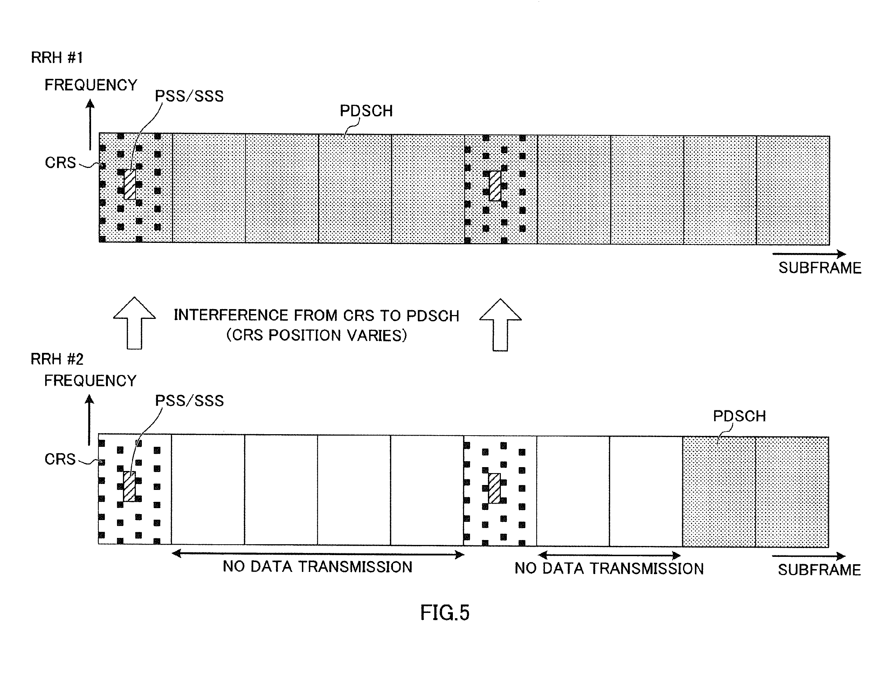

FIG. 5 provides diagrams to show examples of radio resource allocation at base station apparatus RRHs in carrier aggregation. For ease of explanation, FIG. 5 only shows radio resources of base station apparatus RRH #1 used as an S-cell and radio resources of base station apparatus RRH #2 that is close to base station apparatus RRH #1. Also, as in FIG. 4A, a case is shown here as an example where an additional carrier type to reduce the radio resources for CRSs in the time direction is applied.

Each base station apparatus RRH transmits CRSs in varying frequency resources so as not to interfere with each other. In systems of Rel-10 and earlier versions, each base station apparatus RRH transmits CRSs using frequency resources that are shifted by a predetermined amount, in the frequency domain, with respect to the frequency resources of reference signals transmitted from the macro base station apparatus eNB. That is to say, CRSs that are transmitted from each base station apparatus RRH are shifted in the frequency direction from the CRS of the macro base station apparatus eNB. The amount of shift, $V_{shift}$, is determined based on cell-specific IDs (cell IDs) ($V_{shift}$ = (cell ID mod 6)).

In this case, as shown in FIG. 5, the CRS of base station apparatus RRH #1 and the CRS of base station apparatus RRH #2 are transmitted in different frequency resources, and therefore interference is not produced between the CRSs. However, with this additional carrier type, cases might occur where the PDSCH in base station apparatus RRH #1 is allocated in a way to match the frequency resources where the CRS in the base station apparatus RRH #2 is transmitted. Consequently, there is a threat that the CRS of base station apparatus RRH #2 interferes with the PDSCH of base station apparatus RRH #1. Likewise, in an additional carrier type in which the radio resources for CRSs are reduced in the frequency direction, there is a threat that the CRS of a base station apparatus RRH and the PDSCH of another base station apparatus RRH interfere with each other.

In view of this problem, the present inventors have focused on the fact that, in an additional carrier type, it is not strictly necessary to use CRSs in data demodulation, and made the present invention. Unless CRSs are used to demodulate data, interference between the CRSs can be tolerated to an extent, so that it is possible to allow flexibility in the arrangement of CRSs. That is, a gist of the present invention is to reduce the interference between the CRS of a base station apparatus RRH and the PDSCH of another base station apparatus RRH by making the arrangement of CRSs of an additional carrier type different than heretofore.

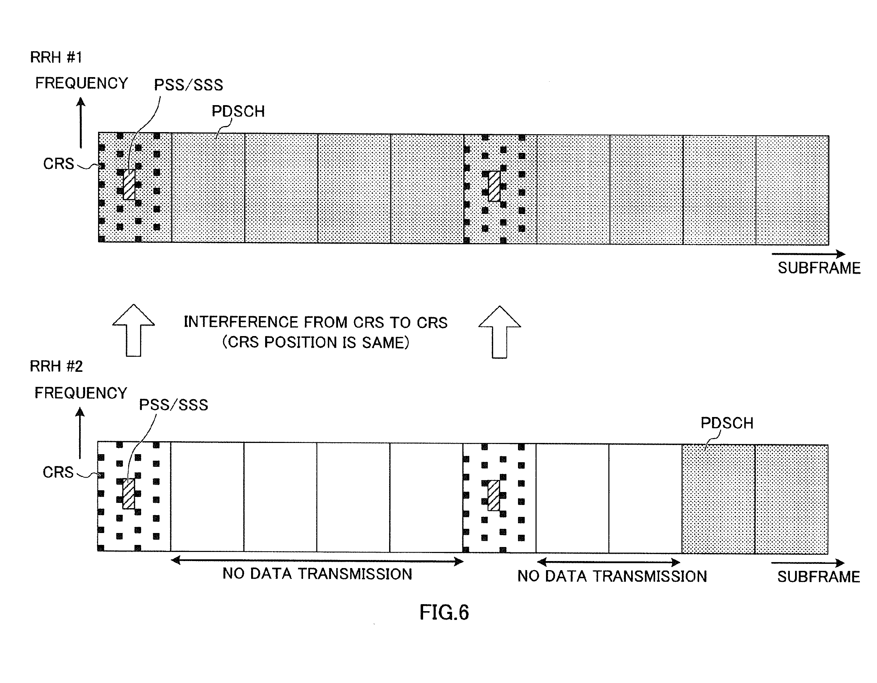

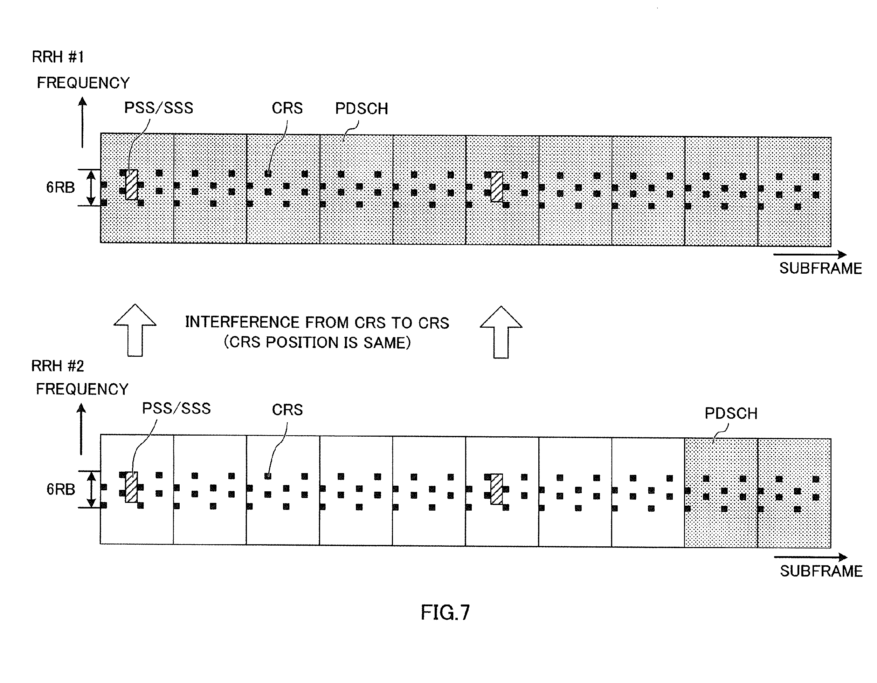

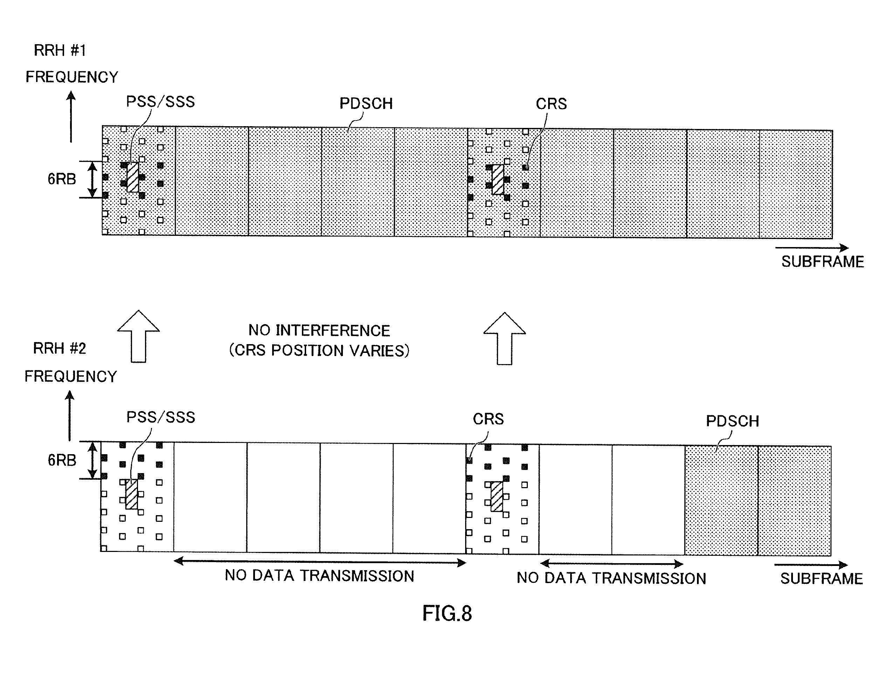

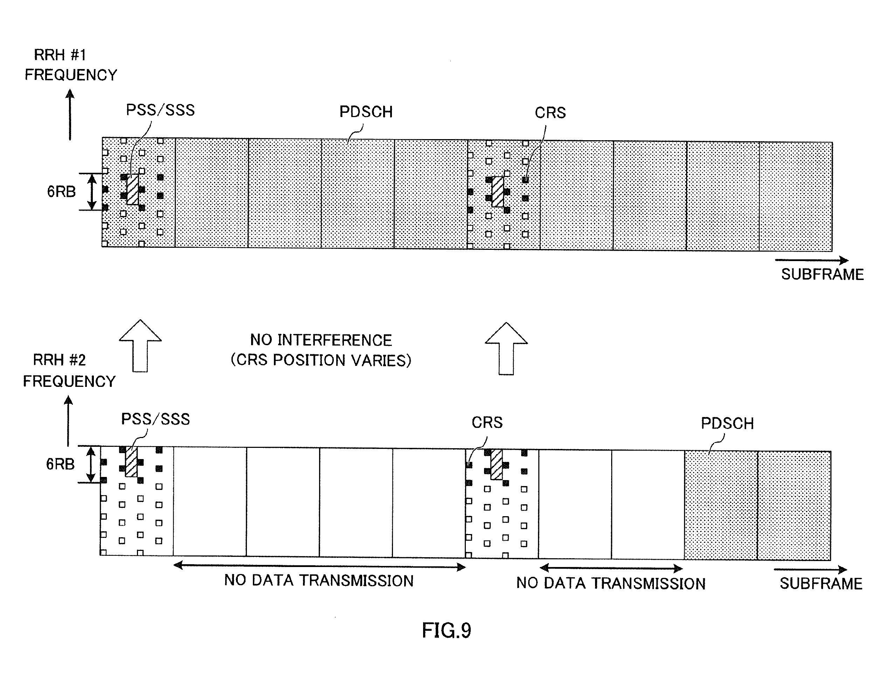

Now, additional carrier types to provide new CRS transmission patterns will be described below with reference to FIG. 6 to FIG. 9. FIG. 6 provides diagrams to show a first example of an additional carrier type. FIG. 7 provides diagrams to show a second example of an additional carrier type. FIG. 8 provides diagrams to show a third example of an additional carrier type. FIG. 9 provides diagrams to show a fourth example of an additional carrier type. Note that, although FIG. 6 to FIG. 9 show only radio resources for base station apparatus RRH #1 that is used as an S-cell and radio resources for base station apparatus RRH #2 that is close to base station apparatus RRH #1, for ease of explanation, there may be other base station apparatus RRHs to form small cells. FIG. 6 to FIG. 9 show only CRS, PDSCH, and PSS/SSS allocation patterns schematically.

As shown in FIG. 6, in the first example, an additional carrier type to reduce the radio resources for CRSs in the time direction is applied (see FIG. 4A). In the first example, the frequency resources to transmit CRSs are set independently of cell IDs, and the CRSs are transmitted in the same frequency resources in all the base station apparatus RRHs. For example, by making the amount of shift to apply to the CRS of the macro base station apparatus eNB fixed regardless of cell IDs ($V_{shift}$=C: C is a constant), it is possible to transmit CRSs in the same frequency resources.

To be more specific, in base station apparatus RRH #1 and base station apparatus RRH #2, the CRSs are transmitted using the same radio resources that overlap in the time direction and in the frequency direction. Also, the CRSs are transmitted at four-subframe intervals (in a five-subframe cycle). The PSSs/SSSs are transmitted in the same subframe with the CRSs. That is to say, the PSSs/SSSs are also transmitted at four-subframe intervals (in a five-subframe cycle). The PDSCH is allocated to the first subframe to the tenth subframe in base station apparatus RRH #1, and is allocated to the ninth subframe and the tenth subframe in base station apparatus RRH #2. However, the CRS transmission interval (transmission cycle) and the PDSCH arrangement are by no means limited to these.

With the first example, CRSs are transmitted using the same radio resources that overlap in the time direction and in the frequency direction in all the additional carrier types, so that the CRS of a base station apparatus RRH and the PDSCH of another base station apparatus RRH are never transmitted in the same radio resources. Consequently, it is possible to reduce the interference from the CRS of the base station apparatus RRH to the PDSCH of the other base station apparatus RRH. In this case, although there is a threat that the CRS of the base station apparatus RRH and the CRS of the other base station apparatus RRH interfere with each other, DM-RSs can be used in data demodulation, so that no problem arises in this regard. CRSs that are transmitted in this additional carrier type are received in a mobile terminal apparatus UE, and can be used, for example, in symbol synchronization and channel quality measurement.

Note that when interference from CRSs to PDSCHs poses no problem, the radio resources to use to transmit the CRSs may be changed per base station apparatus RRH. In this case, for example, the subframe numbers and frequency positions of the CRSs are reported to the mobile terminal apparatus UE by higher layer signaling. By this means, it is possible to allow flexibility in CRS transmission, so that it is possible to reduce the interference from the CRS of a base station apparatus RRH to the PDSCH of another base station apparatus RRH, and, furthermore, reduce the interference from the CRS of the base station apparatus RRH to the CRS of the other base station apparatus RRH.

As shown in FIG. 7, in the second example, an additional carrier type to reduce the radio resources for CRSs in the frequency direction is applied (see FIG. 4B). In the second example, too, the frequency resources to transmit CRSs are set independently of cell IDs, and the CRSs are transmitted in the same frequency resources in all the base station apparatus RRHs. Similar to the first example, assume that the amount of shift to apply to the CRS of the macro base station apparatus eNB is fixed regardless of cell IDs ($V_{shift}$=C: C is a constant).

To be more specific, in both base station apparatus RRH #1 and base station apparatus RRH #2, CRSs are transmitted using six RBs in the center. That is, CRSs are transmitted using the same radio resources that overlap in the time direction and in the frequency direction in all the additional carrier types. However, the frequency range of the radio resources to use to transmit CRSs is by no means limited to this. The arrangement of the PSS/SSS and the PDSCH is the same as in FIG. 6. However, the PDSCH arrangement is by no means limited to this.

With the second example, too, CRSs are transmitted using the same radio resources that overlap in the time direction and in the frequency direction in all the additional carrier types, so that the CRS of a base station apparatus RRH and the PDSCH of another base station apparatus RRH are never transmitted in the same radio resources. Consequently, similar to the first example, it is possible to reduce the interference from the CRS of the base station apparatus RRH to the PDSCH of the other base station apparatus RRH. CRSs that are transmitted in this additional carrier type are received in a mobile terminal apparatus UE, and can be used, for example, in symbol synchronization and channel quality measurement. With the second example, too, when interference from CRSs to PDSCHs poses no problem, the radio resources to use to transmit the CRSs may be changed per base station apparatus RRH.

This second example may be combined with the first example and used. That is to say, it is possible to use an additional carrier type that reduces the radio resources for CRSs in the time direction and in the frequency direction. In this case, too, by setting the frequency resources to transmit CRSs independently of cell IDs, it is possible to transmit CRSs in the same frequency resources in all the base station apparatus RRHs. By this means, it is possible to reduce the interference from the CRS of a base station apparatus RRH to the PDSCH of another base station apparatus RRH.

As shown in FIG. 8, with the third example, an additional carrier type to reduce the radio resources for CRSs in the time direction and in the frequency direction is applied. With the third example, CRSs are arranged in accordance with a reference signal resource arrangement pattern that is common between each base station apparatus RRH. The CRSs are transmitted using frequency resources in part of the reference signal resource arrangement pattern and are arranged such that the frequency resources do not overlap between the base station apparatus RRHs. Zero-power CRSs are arranged in frequency resources in the reference signal resource arrangement pattern where CRSs are not arranged, and CRSs are not transmitted there.

For example, in base station apparatus RRH #1, the CRS is transmitted in six RBs in the center and is not transmitted in the other frequency resources. Also, in base station apparatus RRH #2, the CRS is transmitted in different six RBs and is not transmitted in the other frequency resources. In the reference signal resource arrangement pattern, frequency resources where the CRSs are subject to non-transmission are not used to transmit other signals. That is to say, these frequency resources are subject to zero-power transmission (that is, zero-power reference signals are arranged in these frequency resources). In the third example, CRSs are transmitted at four-subframe intervals (in a five-subframe cycle). However, the transmission frequency and the transmission cycle of the CRSs are by no means limited to these. The arrangement of the PSS/SSS and the PDSCH is the same as in FIG. 6 and so on. However, for example, the PDSCH arrangement is by no means limited to this.

With the third example, the CRS of each base station apparatus RRH is shifted in units of six-RB, such that the frequency resources for CRSs do not overlap between the base station apparatus RRHs. Frequency resources where the CRS is transmitted in a given base station apparatus RRH overlaps with frequency resources that are subject to zero-power transmission in another base station apparatus RRH. To be more specific, the frequency resources where the CRS is transmitted at base station apparatus RRH #1 and the frequency resources that are subject to zero-power transmission at base station apparatus RRH #2 overlap. Also, the frequency resources in which the CRS is transmitted at base station apparatus RRH #2 and the frequency resources that are subject to zero-power transmission at base station apparatus RRH #1 overlap.

In this way, with the third example, the frequency resources to transmit the CRS at a base station apparatus RRH and the frequency resources to be subject to zero-power transmission at another base station apparatus RRH overlap, so that the CRS of the base station apparatus RRH and the PDSCH of the other base station apparatus are never transmitted in the same frequency resources. By this means, it is possible to reduce the interference from the CRS of a base station apparatus RRH to the PDSCH of another base station apparatus RRH. Also, since the frequency resources to transmit the CRSs do not overlap between the base station apparatus RRHs, interference between the CRSs can be reduced.

The subframe numbers and frequency positions of the radio resources where CRSs are transmitted in each base station apparatus RRH are reported to a mobile terminal apparatus UE through higher layer signaling. Also, the amount of shift to apply to CRSs at each base station apparatus RRH can be determined, for example, based on following equation 1:

[1]

$$6 \cdot ( N_{ID}^{cell} \ \mathrm{mod} \ \left[ N_{RB}^{DL} \ / \ 6 \right]) \qquad \ldots (\mathrm{Equation} \ 1)$$

As shown in FIG. 9, the fourth example is equivalent to a modification of the third example. That is to say, although, with the third example, the PSSs/SSSs are transmitted in the same frequency resources in all the additional carrier types, with the fourth example, the PSSs/SSSs are transmitted in varying frequency resources. To be more specific, the frequency resources to transmit the PSSs/SSSs are selected to match the six RBs to transmit CRSs in each base station apparatus RRH. However, it is equally possible to set the frequency positions of the PSSs/SSSs independently of the frequency positions where CRSs are transmitted.

With the fourth example, too, similar to the third example, the CRS of each base station apparatus RRH is shifted in units of six-RB, such that the frequency resources where a given base station apparatus RRH transmits the CRS overlap with the frequency resources that are subject to zero-power transmission at another base station apparatus RRH. That is to say, the CRS of one base station apparatus RRH and the PDSCH of another base station apparatus are never transmitted in the same frequency resources, so that it is possible to reduce the interference from the CRS of the base station apparatus RRH to the PDSCH of the other base station apparatus RRH. Also, since the frequency resources to transmit CRSs do not overlap between the base station apparatus RRHs, it is possible to reduce the interference between the CRSs.

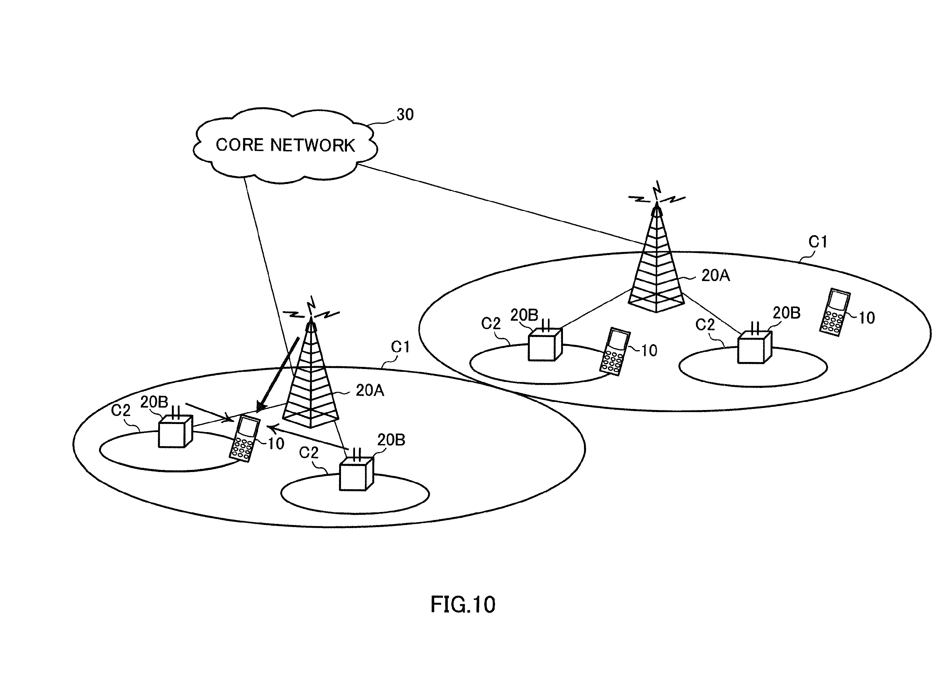

Next, the radio communication system according to the present embodiment will be described. FIG. 10 is a diagram to explain a system configuration of a radio communication system according to the present embodiment. Note that the radio communication system shown in FIG. 10 is a system to accommodate, for example, an LTE system or its successor system. In this radio communication system, carrier aggregation to group a plurality of fundamental frequency blocks as one, where the system band of the LTE system is one unit, is used. Also, this radio communication system may be referred to as "IMT-Advanced" or may be referred to as "4G."

As shown in FIG. 10, the radio communication system is a HetNet, where a base station apparatus 20A (first transmission point) of a cell C1, and a plurality of base station apparatuses 20B (second transmission points) of cells C2 that are provided in the cell C1 build a layered network. The base station apparatus 20A is commonly referred to as a macro base station apparatus, and covers the large cell C1. The base station apparatuses 20B are base station apparatuses (commonly referred to as RRH base station apparatuses), and form the small cells C2, locally, inside the cell C1. The base station apparatus 20A and each base station apparatus 20B are connected with each other by wire connection or by wireless connection. The mobile terminal apparatuses 10 are able to communicate with the base station apparatuses 20A and 20B in the cell C1 and the cell C2, respectively. Also, the base station apparatus 20A is connected with a core network 30 via a higher station apparatus.

Note that the higher station apparatus may be, for example, an access gateway apparatus, a radio network controller (RNC), a mobility management entity (MME) and so on, but is by no means limited to these. Each mobile terminal apparatus 10 may be either a conventional mobile terminal apparatus (Rel-10 or earlier versions) or a new mobile terminal apparatus (Rel-11 or later versions), but the following description will be given simply with respect to a mobile terminal apparatus, unless specified otherwise. Also, it is each mobile terminal apparatus 10 that will be described to perform radio communication with the base station apparatuses 20A and 20B for ease of explanation, more generally, user equipment (UE), which includes both mobile terminal apparatuses and fixed terminal apparatuses, may be used as well.

This radio communication system supports carrier aggregation specialized for a HetNet. In this case, a mobile terminal apparatus 10 captures synchronization with the PSS/SSS from each base station apparatus 20B and receives the CRSs, while being connected with the base station apparatus 20A. The scrambling code to apply to the CRS varies between base station apparatuses 20B (between RRHs), and the scrambling code can be determined from the cell ID acquired from the PSS/SSS. Consequently, it is possible to identify the CRS from each base station apparatus 20B (RRH) based on cell IDs. The mobile terminal apparatus 10 measures the signal quality from each base station apparatus 20B based on the CRSs received, and feeds back the measurement result to the base station apparatus 20A. Then, in accordance with the feedback from the mobile terminal apparatus 10, the base station apparatus 20A detects a base station apparatus 20B of good received quality as an S-cell, and executes carrier aggregation.

In the radio communication system, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channels will be described. Downlink communication channels include a PDSCH that is used by each mobile terminal apparatus 10 on a shared basis, and downlink L1/L2 control channels (PDCCH, PCFICH, PHICH). User data and higher control information are transmitted by the PDSCH. PDSCH and PUSCH (Physical Uplink Shared Channel) scheduling information and so on are transmitted by the PDCCH. The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH, which is used by each mobile terminal apparatus 10 on a shared basis as an uplink data channel, and a PUCCH (Physical Uplink Control Channel), which is an uplink control channel. User data and higher control information are transmitted by the PUSCH. Also, downlink channel quality information (CQI), ACK/NACK and so on are transmitted by the PUCCH.

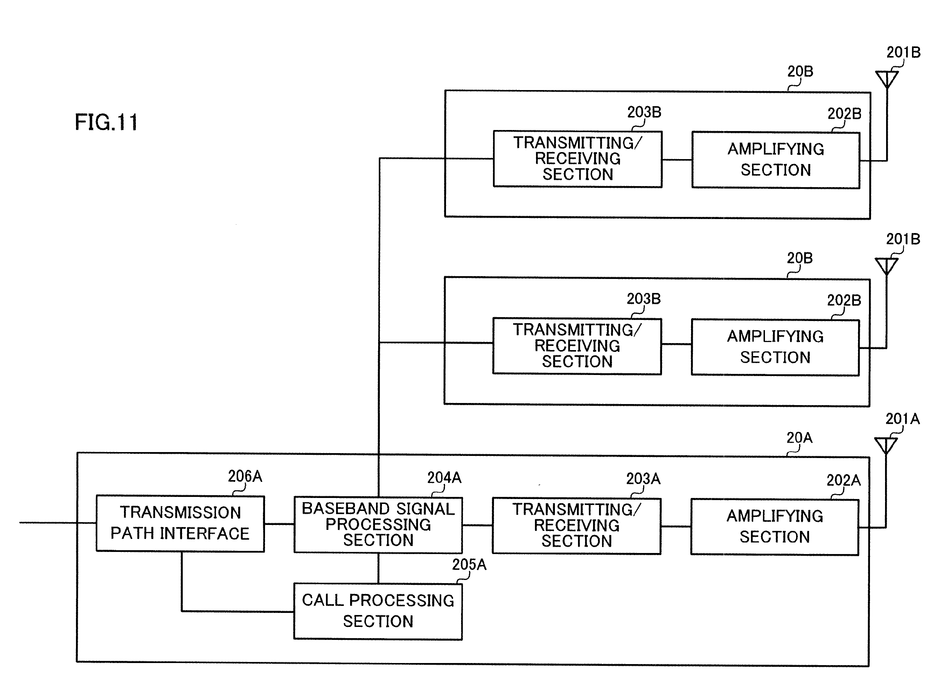

An overall configuration of the base station apparatuses 20A and 20B according to the present embodiment will be described with reference to FIG. 11. Note that the baseband processing is not executed in the base station apparatus 20B, and the base station apparatus 20B receives a baseband signal from the base station apparatus 20A and reports this to the mobile terminal apparatus 10.

The base station apparatus 20A has a transmitting/receiving antenna 201A, an amplifying section 202A, a transmitting/receiving section 203A, a baseband signal processing section 204A, a call processing section 205A, and a transmission path interface 206A. Also, the base station apparatus 20B has a transmitting/receiving antenna 201B, an amplifying section 202B, and a transmitting/receiving section 203B. Transmission data to be transmitted from the base station apparatuses 20A and 20B to the mobile terminal apparatus 10 on the downlink is input from the higher station apparatus into the baseband signal processing section 204A via the transmission path interface 206A.

In the baseband signal processing section 204A, a signal of a downlink data channel is subjected to a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, a signal of a downlink control channel is also subjected to transmission processes such as channel coding and an inverse fast Fourier transform.

Also, the baseband signal processing section 204A reports control information for allowing the mobile terminal apparatuses 10 to perform radio communication with the base station apparatuses 20A and 20B, to the mobile terminal apparatuses 10 connected to the same cell, by a broadcast channel. The information for communication in the cell includes, for example, the uplink or downlink system bandwidth, root sequence identification information (root sequence index) for generating random access preamble signals in the PRACH (Physical Random Access Channel), and so on.

In this case, the baseband signal of CC #1 is output from the baseband signal processing section 204A to the transmitting/receiving section 203A, and the baseband signal of CC #2 is output from the baseband signal processing section 204A to the transmitting/receiving section 203B of the base station apparatus 20B via optical fiber. The baseband signals that are output from the baseband signal processing section 204A are converted into a radio frequency band in the transmitting/receiving sections 203A and 203B. The amplifying sections 202A and 202B amplify the radio frequency signals having been subjected to frequency conversion, and transmit the results from the transmitting/receiving antennas 201A and 201B.

Meanwhile, as for data to be transmitted from the mobile terminal apparatus 10 to the base station apparatuses 20A and 20B on the uplink, radio frequency signals received in the transmitting/receiving antennas 201A and 201B of the base station apparatuses 20A and 20B are amplified in the amplifying sections 202A and 202B, converted into baseband signals through frequency conversion in the transmitting/receiving sections 203A and 203B and input in the baseband signal processing section 204A.

The baseband signal processing section 204A applies, to the transmission data included in the baseband signal received as input, an fast Fourier transform (FFT) process, an inverse discrete Fourier transform (IDFT) process, error correction decoding, a MAC retransmission control receiving process, and RLC layer and PDCP layer receiving processes. The baseband signals are transferred to the higher station apparatus via the transmission path interface 206A. The call processing section 205A performs call processing such as setting up and releasing communication channels, manages the state of the base station apparatuses 20A and 20B and manages the radio resources.

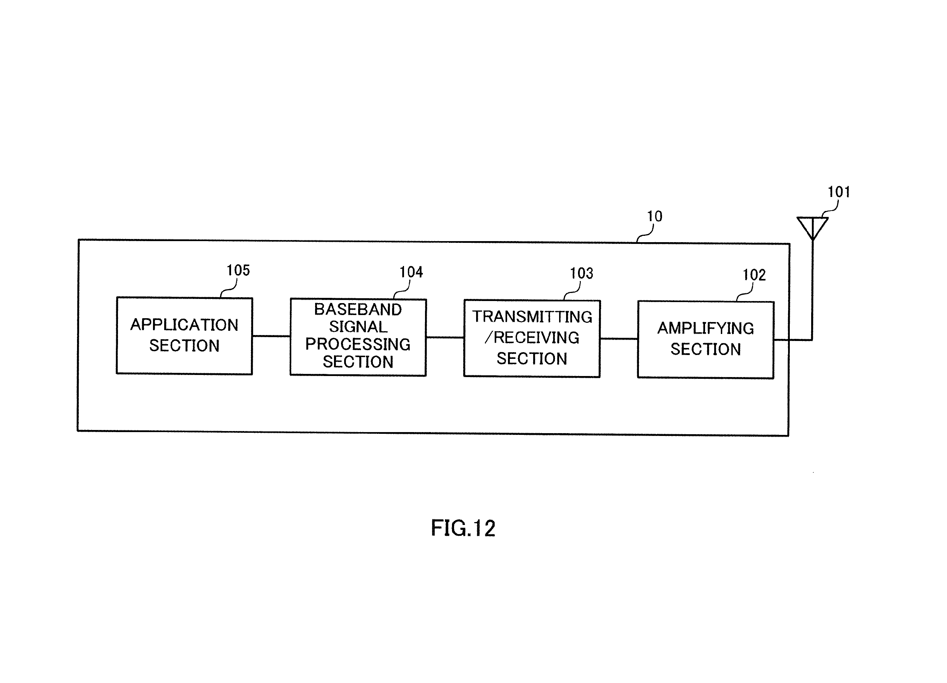

Next, an overall configuration of a mobile terminal apparatus according to the present embodiment will be described with reference to FIG. 12. The mobile terminal apparatus 10 has a transmitting/receiving antenna 101, an amplifying section 102, a transmitting/receiving section 103, a baseband signal processing section 104, and an application section 105.

As for downlink data, a radio frequency signal that is received in the transmitting/receiving antenna 101 is amplified in the amplifying section 102, and subjected to frequency conversion and converted into a baseband signal in the transmitting/receiving section 103. This baseband signal is subjected to receiving processes such as an FFT process, error correction decoding and retransmission control, in the baseband signal processing section 104. In this downlink data, downlink user data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 to the baseband signal processing section 104. The baseband signal processing section 104 performs a mapping process, a retransmission control (H-ARQ) transmission process, channel coding, a discrete Fourier transform (DFT) process, and an IFFT process. The baseband signal that is output from the baseband signal processing section 104 is converted into a radio frequency band in the transmitting/receiving section 103, and, after that, amplified in the amplifying section 102 and transmitted from the transmitting/receiving antenna 101.

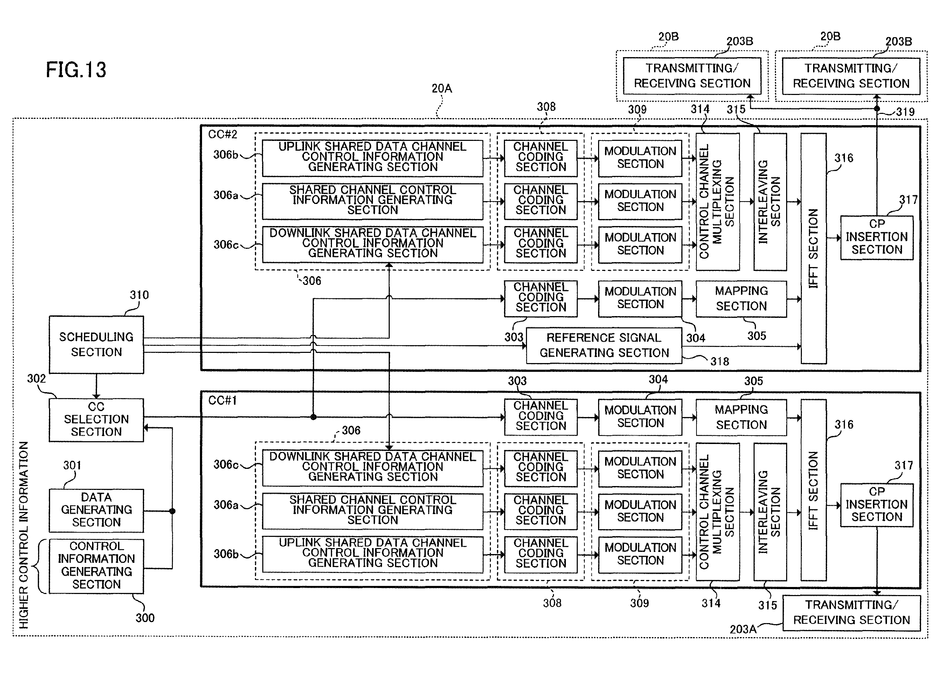

FIG. 13 is a functional block diagram of a baseband signal processing section 204A provided in the base station apparatus 20A according to the present embodiment and part of the higher layers, and primarily illustrates the function blocks for transmission processes in the baseband signal processing section 204A. Transmission data for the mobile terminal apparatus 10 under the base station apparatus 20A is transferred from the higher station apparatus to the base station apparatus 20A. Note that FIG. 13 shows a case where the base station apparatus 20A uses two of CC #1 and CC #2. Obviously, the number of CCs each base station apparatus 20 uses is not limited to this. Also, assume that CC #1 of the base station apparatus 20A is set in a legacy carrier type, and CC #2 is set in an additional carrier type.

A control information generating section 300 generates, per user, higher control information to report to the mobile terminal apparatus 10 through higher layer signaling. The higher control information may include information about the radio resources to use to transmit CRSs in an additional carrier type. For example, in the first example or the second example, it is possible to include information such as the subframe numbers and frequency positions of the radio resources to use to transmit CRSs. Also, it is equally possible to include information related to $V_{shift}$ in the higher control information. In particular, when changing the radio resources to use to transmit CRSs on a per base station apparatus basis, it is preferable to include information about the radio resources to use to transmit CRSs in higher control information. Also, in the third example or the fourth example, it is possible to include information such as the subframe numbers and frequency positions of the radio resources to use to transmit CRSs. In this way, by including information about the radio resources to use to transmit CRSs in higher control information, the transmitting source of the CRSs can be identified.

A data generating section 301 outputs transmission data transferred from the higher station apparatus, as user data, on a per user basis. A component carrier selection section 302 selects, on a per mobile terminal apparatus 10 basis, the component carriers to use for radio communication with the mobile terminal apparatus 10. When carrier aggregation is performed, CC #1 of the base station apparatus 20A is a P-cell and an S-cell is selected from CC #2 of other base station apparatuses 20B connected via optical fiber 319. An increase/decrease of component carriers is reported from the base station apparatus 20A to the mobile terminal apparatus 10 by higher layer signaling, and a message of completion of application is received from the mobile terminal apparatus 10.

A scheduling section 310 controls the allocation of component carriers to a serving mobile terminal apparatus 10 according to the overall communication quality of the system band. The scheduling section 310 performs scheduling separately between LTE terminal users and LTE-A terminal users. The scheduling section 310 receives as input the data to transmit and retransmission commands from the higher station apparatus, and also receives as input the channel estimation values and resource block CQIs from the receiving section having measured an uplink signal.

Also, the scheduling section 310 schedules downlink control channel signals and downlink shared channel signals with reference to the retransmission commands, the channel estimation values and the CQIs received as input. A propagation path in radio communication varies differently per frequency, due to frequency selective fading. So, the scheduling section 310 designates resource blocks (mapping positions) of good communication quality, on a per subframe basis, with respect to the downlink data for each mobile terminal apparatus 10 (which is referred to as "adaptive frequency scheduling"). In adaptive frequency scheduling, for each resource block, a mobile terminal apparatus 10 of good propagation path quality is selected. Consequently, the scheduling section 310 designates resource blocks (mapping positions), using the CQI of each resource block, fed back from each mobile terminal apparatus 10.

Likewise, the scheduling section 310 designates resource blocks of good communication quality, on a per subframe basis, with respect to the control information and so on transmitted by the PDCCH by adaptive frequency scheduling. Consequently, the scheduling section 310 designates resource blocks (mapping positions) using the CQI of each resource block fed back from each mobile terminal apparatus 10. Also, the MCS (coding rate and modulation scheme) to fulfill a predetermined block error rate with the allocated resource blocks is determined. Parameters to fulfill the MCS (coding rate and modulation scheme) determined in the scheduling section 310 are set in channel coding sections 303 and 308, and modulation sections 304 and 309. Note that adaptive frequency scheduling is applied not only to the base station apparatus 20A but is also applied to the base station apparatuses 20B as well via the optical fiber 319.

When carrier aggregation is performed, the scheduling section 310 designates the radio resources for transmitting the CRS in an S-cell in accordance with the additional carrier type that is applied. For example, when the additional carrier type according to the first example is applied, the scheduling section 310 commands that CRSs be transmitted at predetermined subframe intervals using frequency resources that overlap between all the base station apparatuses 20B. When the additional carrier type according to the second example is applied, the scheduling section 310 commands that CRSs be transmitted in a predetermined frequency range using frequency resources that overlap between all the base station apparatuses 20B.

Also, when the additional carrier type according to the third example or the fourth example is applied, the scheduling section 310 commands that CRSs be arranged in part of a reference signal resource arrangement pattern that is common between the base station apparatuses 20B. Also, the scheduling section 310 commands that the frequency resources for CRSs not overlap between the base station apparatuses 20B. Furthermore, the scheduling section 310 commands that the resources in the reference signal resource arrangement pattern of each base station apparatus 20B where CRSs are not arranged be made subject to zero-power transmission (zero-power CRSs).

The baseband signal processing section 204A has channel coding sections 303, modulation sections 304 and mapping sections 305 to support the maximum number of users to multiplex, N, in one CC. The channel coding sections 303 perform channel coding of the downlink shared data channel (PDSCH), which is formed with downlink data (including part of higher control signals) that is output from the data generating section 301, on a per user basis. The modulation sections 304 modulate user data having been subjected to channel coding, on a per user basis. The mapping sections 305 map the modulated user data to radio resources.

Also, the baseband signal processing section 204A has a downlink control information generating section 306 that generates downlink control information, channel coding sections 308, and modulation sections 309. In the downlink control information generating section 306, an uplink shared data channel control information generating section 306b generates uplink scheduling grants (UL grants) for controlling an uplink data channel (PUSCH). The uplink scheduling grants are generated on a per user basis.

Also, a downlink shared data channel control information generating section 306c generates downlink scheduling assignments (DL assignments) for controlling a downlink data channel (PDSCH). The downlink scheduling assignments are generated on a per user basis. Also, a shared channel control information generating section 306a generates shared control channel control information, which is downlink control information that is common between users.

Control information that is modulated in the modulation sections 309 on a per user basis is multiplexed in a control channel multiplexing section 314 and furthermore interleaved in an interleaving section 315. A control signal that is output from the interleaving section 315 and user data that is output from the mapping sections 305 are input in an IFFT section 316 as downlink channel signals.

The baseband signal processing section 204A (CC #2) for the base station apparatus 20B has a reference signal generating section (generating section) 318 that generates downlink reference signals. The reference signal generating section 318 generates the CRSs that are transmitted at each base station apparatus 20B. Note that the reference signal generating section 318 may generate DM-RSs for downlink demodulation, CSI-RSs for CSI measurement, and so on.

The IFFT section 316 receives as input control signals from the interleaving section 315 and receives as input user data from the mapping sections 305, as downlink channel signals. Furthermore, the IFFT section 316 (CC #2) for the base station apparatus 20B receives as input the downlink reference signals from the reference signal generating section 318. The IFFT section 316 performs an inverse fast Fourier transform of the downlink channel signal and the downlink reference signal and converts frequency domain signals into time sequence signals. A cyclic prefix inserting section 317 inserts cyclic prefixes in the time sequence signal of the downlink channel signals. Note that a cyclic prefix functions as a guard interval for cancelling the differences in multipath propagation delay. Transmission data, to which cyclic prefixes have been added, is transmitted to the transmitting/receiving sections 203A and 203B.

Note that, in FIG. 13, in CC #2, all the subframes may be set in an additional carrier type, or predetermined subframes may be set in an additional carrier type and the rest of the subframes may be set in a legacy carrier type. In this case, it is possible to connect not only new mobile terminal apparatuses (Rel-11 and later versions) to CC #2 of the base station apparatus 20B, but it is also possible to connect conventional mobile terminal apparatuses (Rel-10 or earlier versions) as well.

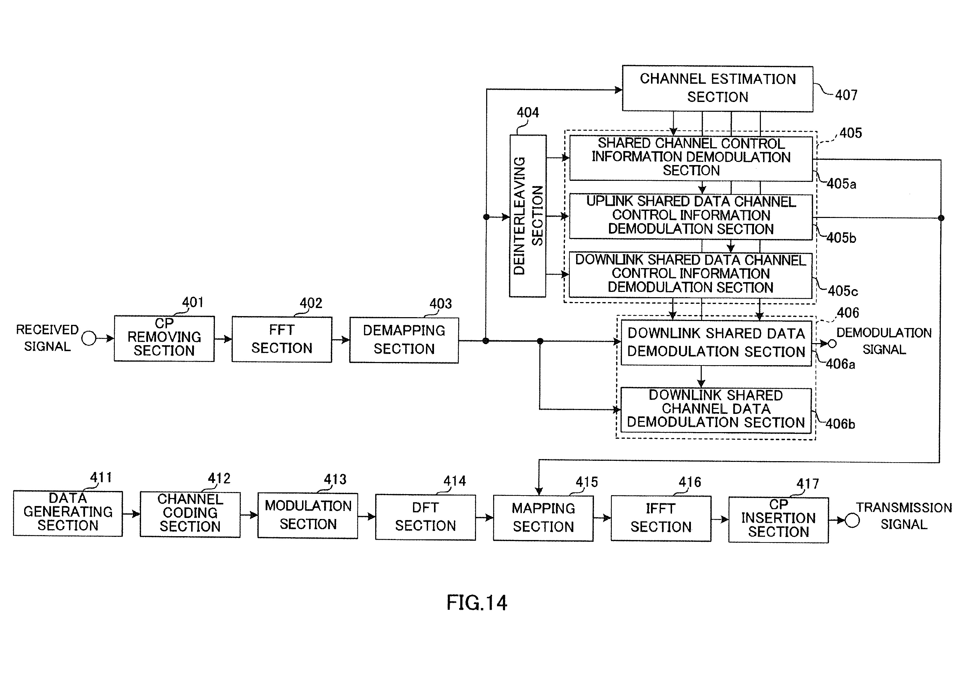

FIG. 14 is a functional block diagram of the baseband signal processing section 104 in the mobile terminal apparatus 10, and shows the function blocks of an LTE-A terminal that supports an additional carrier type.

Downlink signals that are received as received data from the base station apparatuses 20A and 20B have the CPs removed in a CP removing section 401. The downlink signals, from which the CPs have been removed, are input in an FFT section 402. The FFT section 402 performs a fast Fourier transform on the downlink signals, converts the time domain signals into frequency domain signals and inputs the signals in a demapping section 403. The demapping section 403 demaps the downlink signals, and extracts, from the downlink signals, multiplex control information in which a plurality of pieces of control information are multiplexed, user data and higher control signals. Note that the demapping process by the demapping section 403 is performed based on higher control signals that are received as input from the application section 105. The multiplex control information that is output from the demapping section 403 is deinterleaved in a deinterleaving section 404.

Also, the baseband signal processing section 104 has a downlink control information demodulation section 405 that demodulates downlink control information, a data demodulating section 406 that demodulates downlink shared data, and a channel estimation section 407. The downlink control information demodulation section 405 includes a shared channel control information demodulation section 405a that demodulates shared control channel control information from the multiplex control information, an uplink shared data channel control information demodulation section 405b that demodulates uplink shared data channel control information from the multiplex control information, and a downlink shared data channel control information demodulation section 405c that demodulates downlink shared data channel control information from the multiplex control information.

The shared channel control information demodulation section 405a extracts shared control channel control information, which is control information that is common between users, by, for example, performing a blind decoding process of the common search space in the downlink control channel (PDCCH), a demodulation process, and a channel decoding process and so on. The shared control channel control information includes downlink channel quality information (CQI), and therefore is input in a mapping section 415 and mapped as part of transmission data for the base station apparatus 20.

The uplink shared data channel control information demodulation section 405b extracts uplink shared data channel control information (for example, UL grants), by, for example, performing a blind decoding process of the user-specific search spaces of the downlink control channel (PDCCH), a demodulation process, and a channel decoding process and so on. The demodulated uplink shared data channel control information is input in the mapping section 415 and is used to control the uplink shared data channel (PUSCH).

The downlink shared data channel control information demodulation section 405c extracts user-specific downlink shared data channel control information (for example, DL assignments) by performing a blind decoding process of the user-specific search spaces of the downlink control channel (PDCCH), a demodulation process, a channel decoding process and so on. The demodulated downlink shared data channel control information is input in the data demodulation section 406 and used to control the downlink shared data channel (PDSCH), and input in a downlink shared data demodulation section 406a.

The data demodulation section 406 has the downlink shared data demodulation section 406a that demodulates the user data and higher control signals, and a downlink shared channel data demodulation section 406b that demodulates downlink shared channel data.

The downlink shared data demodulation section 406a acquires user data and higher control information based on the downlink shared data channel control information that is input from the downlink shared data channel control information demodulation section 405c. The downlink shared channel data demodulation section 406b demodulates downlink shared channel data based on the uplink shared data channel control information that is input from the uplink shared data channel control information demodulation section 405b. In this case, the data demodulation section 406 performs derate matching by switching the rate matching pattern depending on the carrier type of the component carriers. For example, with component carriers of an additional carrier type, the demodulation process is performed adequately taking into account the user data allocated to the CRS and PDCCH resources.

The channel estimation section 407 performs channel estimation using user-specific reference signals (DM-RSs) or cell-specific reference signals (CRSs). The channel estimation section 407 outputs the estimated channel variation to the shared control channel control information demodulation section 405a, the uplink shared data channel control information demodulation section 405b, the downlink shared data channel control information demodulation section 405c and the downlink shared data demodulation section 406a. In these demodulation sections, the demodulation process is performed using the estimated channel variation and the reference signals for demodulation.

Also, the baseband signal processing section 104 has, as function blocks of the transmission processing system, a data generating section 411, a channel coding section 412, a modulation section 413, a DFT section 414, a mapping section 415, an IFFT section 416, and an CP inserting section 417. The data generating section 411 generates transmission data from bit data that is received as input from the application section 105. The channel coding section 412 applies channel coding processes such as error correction to the transmission data, and the modulation section 413 modulates the transmission data after the channel coding by QPSK and so on.

The DFT section 414 performs a discrete Fourier transform on the modulated transmission data. The mapping section 415 maps the frequency components of the data symbols after the DFT to subcarrier positions designated by the base station apparatuses 20A and 20B. The IFFT section 416 converts the input data, which corresponds to the system band, into time sequence data, by performing an inverse fast Fourier transform, and the CP inserting section 417 inserts cyclic prefixes in the time sequence data in data units.

As described above, with the communication system according to the present embodiment, the arrangement of CRSs of additional carrier types is made different than heretofore, so that it is possible to reduce the interference from the CRSs to the PDSCH. Consequently, at a mobile terminal apparatus 10, the received quality of signals transmitted in the PDSCH such as user data improves. In this way, it is possible to make effective use of conventional systems and furthermore achieve a communication system, a base station apparatus and a communication method that are suitable for carrier aggregation in a HetNet.

The present invention is by no means limited to the above embodiment and can be implemented in various modifications. For example, without departing from the scope of the present invention, it is possible to adequately change the number of carriers, the bandwidth of carriers, the signaling method, the types of additional carrier types, the number of processing sections, the order of processing steps in the above description, and implement the present invention. Besides, the present invention can be implemented with various changes, without departing from the scope of the present invention.

The disclosure of Japanese Patent Application No. 2012-062745, filed on March 19, 2012, including the specification, drawings and abstract, is incorporated herein by reference in its entirety.

**Claims**

1. A communication system which provides a first transmission point and a plurality of second transmission points, and which controls carriers such that a mobile terminal apparatus communicates with the first transmission point using a first carrier and communicates with a second transmission point using a second carrier which is different from the first carrier, wherein:

   base station apparatuses to constitute the second transmission points comprise a transmission section that transmits a cell-specific reference signal in the second carrier, using the same frequency resource between the second transmission points; and
   the mobile terminal apparatus comprises a receiving section that receives a reference signal transmitted from the second transmission point by the second carrier.

2. The communication system according to claim 1, wherein the base station apparatuses to constitute the second transmission points transmit the reference signals at predetermined subframe intervals.

3. The communication system according to claim 1, wherein the base station apparatuses to constitute the second transmission points transmit the reference signals in predetermined frequency resources in the second carrier.

4. The communication system according to claim 1, wherein the mobile terminal receives downlink signals including the reference signals in frequency resources reported by way of higher layer signaling.

5. A base station apparatus constituting a second transmission point used in a communication system which provides a first transmission point and a plurality of second transmission points, and which controls carriers such that a mobile terminal apparatus communicates with the first transmission point using a first carrier and communicates with a second transmission point using a second carrier which is different from the first carrier, the base station comprising:

   a transmission section that transmits a cell-specific reference signal in the second carrier, using the same frequency resource between the second transmission points.

6. A base station apparatus constituting a first transmission point used in a communication system which provides the first transmission point and a plurality of second transmission points, and which controls carriers such that a mobile terminal apparatus communicates with the first transmission point using a first carrier and communicates with a second transmission point using a second carrier which is different from the first carrier, the base station apparatus comprising:

   a generating section that generates cell-specific reference signals transmitted from the second transmission points by the second carrier; and
   a scheduling section that executes scheduling such that the reference signals are transmitted from each of the plurality of second transmission points using the same frequency resource,
   wherein the base station apparatus transmits downlink signals including the reference signals are transmitted to base station apparatuses to constitute the second transmission points.

7. A communication method which provides a first transmission point and a plurality of second transmission points, and which controls carriers such that a mobile terminal apparatus communicates with the first transmission point using a first carrier and communicates with a second transmission point using a second carrier which is different from the first carrier, the communication method comprising the steps of:

   transmitting, in base station apparatuses to constitute the second transmission points, cell-specific reference signals in the second carrier, using the same frequency resource between the second transmission points; and
   receiving, in the mobile terminal apparatus, the reference signal transmitted from the second transmission point by the second carrier.

8. A communication system which provides a first transmission point and a plurality of second transmission points, and which controls carriers such that a mobile terminal apparatus communicates with the first transmission point using a first carrier and communicates with a second transmission point using a second carrier, which is different from the first carrier, wherein:

base station apparatuses to constitute the second transmission points comprise a transmission section that arranges cell-specific reference signals according to a reference signal resource arrangement pattern that is common between the second transmission points and arranges zero-power reference signals in part in the reference signal resource arrangement pattern so that frequency resources for the reference signals do not overlap between the second transmission points; and

the mobile terminal apparatus comprises a receiving section that receives the reference signals transmitted from the second transmission point by the second carrier.

9. The communication system according to claim 8, wherein the base station apparatuses to constitute the second transmission points transmit synchronization signals using the same frequency resource between the second transmission points.

10. The communication system according to claim 8, wherein the base station apparatuses to constitute the second transmission points transmit synchronization signals using different frequency resources between the second transmission points.

BASE BAND (ex. 20 MHZ) COMPONENT CARRIER (CC)

SYSTEM BAND (ex. 100 MHZ)

UE#1(LTE-A)

UE#2(LTE-A)

UE#2(LTE-A)

UE#3(LTE)  UE#3(LTE)  UE#3(LTE)  UE#3(LTE)  UE#3(LTE)

FIG.1

FIG.2

FIG.3

FIG.4A

FIG.4B

EP 2 836 001 A1

RRH #1

FREQUENCY

PSS/SSS

PDSCH

CRS

SUBFRAME

↑ INTERFERENCE FROM CRS TO PDSCH ↑
(CRS POSITION VARIES)

RRH #2

FREQUENCY

PSS/SSS

PDSCH

CRS

NO DATA TRANSMISSION    NO DATA TRANSMISSION    SUBFRAME

FIG.5

EP 2 836 001 A1

RRH #1

FREQUENCY

PSS/SSS

PDSCH

CRS

SUBFRAME

INTERFERENCE FROM CRS TO CRS
(CRS POSITION IS SAME)

RRH #2

FREQUENCY

PSS/SSS

PDSCH

CRS

NO DATA TRANSMISSION

NO DATA TRANSMISSION

SUBFRAME

FIG.6

RRH #1

FREQUENCY

PSS/SSS     CRS     PDSCH

6RB

SUBFRAME

INTERFERENCE FROM CRS TO CRS
(CRS POSITION IS SAME)

RRH #2

FREQUENCY

PSS/SSS     CRS     PDSCH

6RB

SUBFRAME

FIG.7

RRH #1

FREQUENCY

PSS/SSS

PDSCH

CRS

6RB

SUBFRAME

NO INTERFERENCE
(CRS POSITION VARIES)

RRH #2

FREQUENCY

PSS/SSS

CRS

PDSCH

6RB

NO DATA TRANSMISSION

NO DATA TRANSMISSION

SUBFRAME

FIG.8

RRH #1
FREQUENCY

PSS/SSS        PDSCH        CRS

6RB

SUBFRAME

NO INTERFERENCE
(CRS POSITION VARIES)

RRH #2
FREQUENCY

PSS/SSS        CRS        PDSCH

6RB

NO DATA TRANSMISSION        NO DATA TRANSMISSION        SUBFRAME

FIG.9

EP 2 836 001 A1

FIG.10

EP 2 836 001 A1

EP 2 836 001 A1

FIG.11

20B

201B

203B

202B

TRANSMITTING/
RECEIVING
SECTION

AMPLIFYING
SECTION

20B

201B

203B

202B

TRANSMITTING/
RECEIVING
SECTION

AMPLIFYING
SECTION

20A

201A

206A

204A

203A

202A

TRANSMISSION
PATH INTERFACE

BASEBAND SIGNAL
PROCESSING
SECTION

TRANSMITTING/
RECEIVING
SECTION

AMPLIFYING
SECTION

205A

CALL PROCESSING
SECTION

FIG.12

# FIG.13

EP 2 836 001 A1

FIG.14

EP 2 836 001 A1

## INTERNATIONAL SEARCH REPORT

| | International application No. |
|---|---|
| | PCT/JP2013/057040 |

**A. CLASSIFICATION OF SUBJECT MATTER**
*H04W16/32*(2009.01)i, *H04W72/04*(2009.01)i

According to International Patent Classification (IPC) or to both national classification and IPC

**B. FIELDS SEARCHED**

Minimum documentation searched (classification system followed by classification symbols)
H04W16/32, H04W72/04

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | NTT DOCOMO, On the need for additional carrier types in Rel-11 CA, [online]. 3GPP TSG RAN WG1 Meeting #66bis R1-113289, 2011.10.10, [retrieved on 2013-05-02]. Retrieved from the Internet: <URL:http://www.3gpp.org/ftp/tsg_ran/wg1_rl1/TSGR1_66b/Docs/R1-113289.zip> | 1-10 |
| Y | Qualcomm Incorporated, Comparison of CoMP Scenarios 3 and 4, [online]. 3GPP TSG-RAN WG1 #65 R1-111686, 2011.05.09, [retrieved on 2013-05-02]. Retrieved from the Internet: <URL:http://www.3gpp.org/ftp/tsg_ran/wg1_rl1/TSGR1_65/Docs/R1-111686.zip> | 1-10 |

[X] Further documents are listed in the continuation of Box C.   [ ] See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 May, 2013 (02.05.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/057040 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | NEC Group, Design consideration for additional carrier type, [online]. 3GPP TSG RAN WG1 Meeting #68 R1-120249, 2012.02.06, [retrieved on 2013-05-02]. Retrieved from the Internet: <URL:http://www.3gpp.org/ftp/tsg_ran/wg1_rl1/TSGR1_68/Docs/R1-120249.zip> | 3 |
| Y | NTT DOCOMO, Investigation of Specification Impact for Rel. 11 CoMP, [online]. 3GPP TSG RAN WG1 Meeting #66 R1-112600, 2011.08.22, [retrieved on 2013-05-02]. Retrieved from the Internet: <URL:http://www.3gpp.org/ftp/tsg_ran/wg1_rl1/TSGR1_66/Docs/R1-112600.zip> | 4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   JP 2012062745 A

**Non-patent literature cited in the description**

•   Requirements for Evolved UTRA and Evolved UTRAN. *3GPP TR 25.913*